# FASCICULE DE BREVET EUROPEEN

(11) **EP 2 623 746 B1**
(45) Date de publication et mention de la délivrance du brevet: **15.04.2015**
(21) Numéro de dépôt: 12007806.8
(22) Date de dépôt: 19.11.2012
(51) Int. Cl.: F02C 9/00, B64D 31/00, G07C 5/08, G05B 23/02

(54) **Procédé d'optimisation de performances d'un aéronef, dispositif et aéronef**
Optimierungsverfahren der Leistungen eines Luftfahrzeugs, Vorrichtung und Luftfahrzeug
Method for optimising the performance of an aircraft, device and aircraft

(30) Priorité: 06.02.2012 FR 1200340
(43) Date de publication de la demande: 07.08.2013
(73) Titulaire: Airbus Helicopters, 13725 Marignane Cedex (FR)
(72) Inventeur: Evrard, Jean-Philippe, F-13012 Marseille (FR); Corpron, Alban, F-13300 Salon DE Provence (FR)
(74) Mandataire: GPI & Associés

(56) Documents cités:
- EP-A1- 1 741 901
- FR-A1- 2 899 640
- FR-A1- 2 902 407
- US-B2- 7 487 029
- US-B2- 8 068 997

## Description

La présente invention concerne un procédé d'optimisation de performances d'un aéronef, un dispositif et un aéronef.

L'invention se situe donc dans le domaine technique des installations motrices de véhicule, notamment un aéronef et plus particulièrement un giravion.

En effet, un aéronef est usuellement muni d'au moins un moteur pour assurer sa propulsion. Par exemple, un aéronef à voilure tournante comporte une installation motrice pourvue d'au moins un moteur afin de mettre en rotation une voilure tournante. Un hélicoptère est par exemple souvent équipé d'au moins un turbomoteur, dénommé parfois « turbine à gaz ».

Chaque turbomoteur est dimensionné pour pouvoir être utilisé selon au moins un régime de fonctionnement, chaque régime de fonctionnement associant une puissance développée à une durée d'utilisation.

Parmi les régimes connus, on peut citer:
- le régime de décollage associant une puissance maximale au décollage PMD à une durée d'utilisation de l'ordre de cinq à dix minutes,
- le régime maximal continu associant une puissance maximale en continu PMC à une durée d'utilisation illimitée.

Il existe aussi des régimes de surpuissance en urgence sur les aéronefs comprenant au moins deux turbomoteurs, ces régimes étant utilisés lorsque l'un des turbomoteurs tombe en panne:
- un premier régime d'urgence associant une puissance de super urgence OEI30" à une durée de l'ordre de trente secondes consécutives, ce premier régime d'urgence pouvant être utilisé environ trois fois pendant un vol;
- un deuxième régime d'urgence associant une puissance maximale d'urgence OEI2' à durée d'utilisation de l'ordre de deux minutes ;
- un troisième régime d'urgence associant une puissance intermédiaire d'urgence à une durée d'utilisation couvrant la fin d'un vol après la panne du turbomoteur par exemple.

En parallèle, il est courant de déterminer le nombre d'heures de vol que peut supporter un turbomoteur d'aéronef avant de devoir être révisé. Ce nombre d'heures de vol est connu sous l'acronyme TBO ou l'expression « time between overhaul » en langue anglaise.

Les performances d'un aéronef dépendent alors de la puissance pouvant être développée par chaque turbomoteur dans les différents régimes. Par exemple, la masse d'un aéronef au décollage et sa vitesse de croisière sont notamment conditionnées par la puissance développée par chaque turbomoteur.

Toutefois, la puissance développée par un turbomoteur tend à décroître dans le temps. Les puissances développées par un turbomoteur neuf sont généralement supérieures aux puissances développées par un turbomoteur vieilli atteignant le nombre d'heures de vol TBO.

Dès lors pour garantir les performances requises indépendamment de l'ancienneté des turbomoteurs d'un aéronef, il est possible de surdimensionner les turbomoteurs.

En effet, on comprend que les performances d'un turbomoteur neuf et les performances d'un turbomoteur vieilli peuvent être différentes. Par suite, les turbomoteurs neufs peuvent être plus puissants que les turbomoteurs requis et certifiés pour garantir les performances de l'aéronef tout au long de sa durée de vie. Chaque turbomoteur neuf présente alors une marge de puissance par rapport aux puissances requises.

Typiquement, un turbomoteur peut présenter une marge de puissance comprise entre 2% et 10% par rapport aux puissances requises et certifiées. Dans ces conditions, les performances d'un aéronef sont donc garanties durant toute la vie des turbomoteurs.

Cependant, on comprend que chaque turbomoteur peut présenter une marge de puissance non exploitée en termes de performances de l'aéronef.

Par ailleurs, certains règlements de certification peuvent requérir des moyens pour vérifier que chaque turbomoteur est à même de fournir les puissances permettant à l'aéronef d'atteindre les performances certifiées.

Par suite, il est possible de réaliser un contrôle de santé des turbomoteurs. La procédure de contrôle de santé des turbomoteurs d'un aéronef permet de mesurer les marges de fonctionnement des turbomoteurs pour un paramètre de surveillance donné.

Par exemple, deux paramètres de surveillance peuvent être utilisés pour contrôler les performances d'un turbomoteur.

Le turbomoteur étant pourvu d'une turbine haute pression disposée en amont d'un turbine libre, un premier paramètre de surveillance est la température, dénommée TET par l'homme du métier, des gaz à l'entrée de la turbine haute pression.

Néanmoins, la température TET étant difficile à mesurer en raison de son niveau élevé, le premier paramètre de surveillance est de préférence la température, dénommée T45 par l'homme du métier, des gaz à l'entrée de la turbine libre. Cette dernière est une bonne image de la température TET, par suite elle est représentative de la dégradation du turbomoteur.

Un premier paramètre de surveillance est donc une température d'un ensemble de turbines, cette température pouvant être la température TET des gaz à l'entrée de la turbine haute pression ou la température T45 des gaz à l'entrée de la turbine libre.

Par ailleurs, un autre paramètre de surveillance est relatif à la puissance délivrée par le turbomoteur ou encore au couple du turbomoteur, la puissance et le couple du turbomoteur étant dépendant l'un de l'autre. Néanmoins, la vitesse de rotation du générateur de gaz du turbomoteur, dénommée Ng par l'homme du métier, étant finalement liée à la puissance délivrée par le turbomoteur, un deuxième paramètre de surveillance retenu peut être cette vitesse de rotation Ng du générateur de gaz.

Par suite, le contrôle de l'état de santé du turbomoteur peut consister par exemple :
- à mesurer le premier paramètre de surveillance puis à vérifier que la valeur de la puissance courante est supérieure ou égale à la valeur de puissance qu'aurait un turbomoteur vieilli dans les mêmes conditions, ou
- à mesurer le deuxième paramètre de surveillance puis à vérifier que la valeur de la puissance courante est supérieure ou égale à la valeur de puissance qu'aurait un turbomoteur vieilli dans les mêmes conditions.

En comparant la valeur courante d'un paramètre de surveillance à la valeur minimale qu'aurait ce paramètre de surveillance sur un turbomoteur vieilli, le constructeur peut estimer la marge de puissance du turbomoteur.

On note qu'il est aussi possible de mesurer des informations relatives à la puissance développée par le turbomoteur pour une valeur donnée du premier ou du deuxième paramètre de surveillance.

Par exemple sur un aéronef à voilure tournante, on mesure le couple développé par le turbomoteur et la vitesse d'évolution Nr de la voilure tournante. On en déduit alors classiquement la puissance développée par le turbomoteur surveillé.

On se référera à la littérature pour obtenir des informations sur les diverses procédures de contrôle de santé d'un turbomoteur.

Par conséquent, un constructeur implémente classiquement au moins un turbomoteur surdimensionné sur un aéronef pour garantir les performances de l'aéronef entre deux actions de maintenance. De plus, le constructeur met en place des procédures de contrôle de santé pour vérifier que chaque turbomoteur peut effectivement développer des puissances permettant d'assurer lesdites performances.

Cette approche conservatrice est intéressante dans la mesure où les performances de l'aéronef sont garanties. Cependant, l'aéronef peut disposer durant sa durée de vie d'une marge de puissance non exploitée en termes de performances.

Selon une autre approche, la masse au décollage de l'aéronef est déterminée en fonction d'une marge de puissance déterminée lors d'un contrôle de santé de chaque turbomoteur d'un aéronef. La masse au décollage n'est pas figée par le constructeur mais évolue en fonction des résultats des contrôles de santé.

Selon une réalisation connue, cette masse au décollage peut évoluer par pas de 2% d'une marge de puissance, cette marge de puissance résultant d'un contrôle de santé.

La détermination de la masse au décollage d'un aéronef en fonction de la marge de puissance disponible est intéressante. Cependant, il convient de réaliser fréquemment un contrôle de santé des turbomoteurs.

En outre, un utilisateur peut difficilement évaluer la durée d'utilisation de son aéronef pour une masse au décollage donnée, cette masse au décollage étant vouée à évoluer en fonction de l'usure des turbomoteurs.

On connaît aussi les documents FR 2902407, FR 2899640, US 7487029, US 8068997, EP 1741901.

La présente invention a alors pour objet de proposer un procédé permettant d'optimiser les performances d'un véhicule en fonction de la santé d'un turbomoteur, afin d'optimiser la marge de puissance disponible pour chaque turbomoteur de l'aéronef.

Selon l'invention, un procédé d'optimisation des performances d'un aéronef à voilure tournante mis en mouvement par une installation motrice comprenant au moins un turbomoteur, chaque turbomoteur ayant un générateur de gaz et un ensemble comprenant au moins une turbine est notamment remarquable en ce que :
- durant une étape de définition, un premier niveau de performances minimales de l'aéronef et un deuxième niveau de performances maximales de l'aéronef sont définis par le constructeur, et
- durant une étape de contrôle, au moins un contrôle de la santé de chaque turbomoteur est réalisé en :
   ∘ déterminant une puissance courante délivrée par chaque turbomoteur,
   ∘ mesurant une vitesse de rotation Ng courante du générateur de gaz et une température TET, T45 courante des gaz dudit ensemble, à savoir soit la température TET des gaz à l'entrée d'une turbine haute pression ou soit la température T45 des gaz à l'entrée d'une turbine libre faisant suite à la turbine haute pression,
   ∘ déterminant une première marge de puissance entre ladite première puissance courante et une première puissance minimale définie par le constructeur pour garantir ledit premier niveau de performances à ladite vitesse de rotation Ng courante,
   ∘ déterminant une deuxième marge de puissance entre ladite puissance courante et une deuxième puissance minimale définie par le constructeur pour garantir ledit premier niveau de performances à ladite température TET, T45 courante, et
- durant une étape d'évaluation, on compare chaque marge de puissance à un premier seuil, un niveau de performances cible étant le deuxième niveau de performances lorsque la première et la deuxième marges de puissance de chaque turbomoteur sont respectivement supérieures ou égales à un premier seuil haut et un deuxième seuil haut, ledit niveau de performances cible étant le premier niveau de performances lorsque la première marge de puissance d'un turbomoteur est inférieure au premier seuil haut et/ou lorsque la deuxième marge de puissance d'un turbomoteur est inférieure au deuxième seuil haut, et
- on affiche le niveau de performances cible, et on pilote l'aéronef durant un vol selon le niveau de performances cible établi avant ce vol.

Par conséquent, un constructeur définit deux niveaux de performances pour l'aéronef.

Le premier niveau de performances correspond au niveau de performances classique mis en oeuvre par l'état de la technique. Ce premier niveau de performances peut être atteint par la mise en oeuvre des puissances minimales garanties par les turbomoteurs.

Par contre, le deuxième niveau de performances vise à exploiter les marges de puissance des turbomoteurs de l'aéronef.

Pour choisir le niveau de performances pouvant être utilisé, une étape de contrôle de la santé des turbomoteurs est réalisée.

Ce contrôle de santé permet de déterminer la puissance courante développée par le turbomoteur. Par exemple, on mesure le couple développé par chaque turbomoteur et la vitesse d'évolution Nr en rotation de la voilure tournante de l'aéronef à l'aide de capteurs usuels. On en déduit alors classiquement la puissance courante. Toute méthode de détermination de la puissance développée par un moteur peut être utilisée.

De plus, durant le contrôle de santé, on mesure une vitesse de rotation Ng courante du générateur de gaz de chaque turbomoteur et une température TET, T45 courante dudit ensemble de turbines de chaque turbomoteur.

Dès lors, à l'aide d'abaques définis par le constructeur et mémorisés, pour chaque turbomoteur on détermine une première puissance minimale correspondant à sa vitesse de rotation Ng courante. Autrement dit, on détermine la puissance minimale que doit fournir le turbomoteur lorsque sa vitesse de rotation Ng est égale à la vitesse de rotation Ng courante mesurée.

On en déduit une première marge de puissance entre la puissance courante et la première puissance minimale.

De plus, à l'aide d'abaques définis par le constructeur et mémorisés, pour chaque turbomoteur on détermine une deuxième puissance minimale correspondant à sa température TET, T45 courante. Autrement dit, on détermine la puissance minimale que doit fournir le turbomoteur lorsque sa température est égale à la température TET, T45 courante mesurée.

Le contrôle de santé permet alors déterminer une deuxième marge de puissance entre la puissance courante et la deuxième puissance minimale, en prenant en considération la température TET des gaz à l'entrée de la turbine haute pression de cet ensemble ou la température T45 des gaz à l'entrée d'une turbine libre faisant suite à la turbine haute pression.

Il est intéressant de prendre en considération ces deux paramètres de surveillances des turbomoteurs. En effet, on constate des évolutions différentes de la première marge de puissance et de la deuxième marge de puissance dans le temps. Lors d'une dégradation des marges de puissances due à une usure naturelle d'un turbomoteur, la deuxième marge de puissance tend à décroître plus rapidement que la première marge de puissance.

Suite à cette étape de contrôle, une étape d'évaluation des performances est mise en oeuvre.

Si chaque marge de puissance est supérieure ou égale au seuil haut associé, l'installation motrice est en mesure de garantir le fonctionnement de l'aéronef selon le deuxième niveau de performances. Si les turbomoteurs présentent des marges de puissance, il est alors possible d'exploiter ces marges de puissance pour maximiser les performances de l'aéronef.

Par contre, si une marge de puissance est inférieure au seuil haut associé, l'installation motrice n'est plus en mesure de garantir ce deuxième niveau de performances.

Dès lors, le niveau de performances cible à respecter est soit le premier niveau de performances soit le deuxième niveau de performances en fonction du résultat de l'évaluation.

Le seuil haut peut être éventuellement défini en fonction d'une durée d'utilisation du deuxième niveau de performances objectif, et des marges de puissance disponibles sur un turbomoteur neuf.

En effet, on constate que lors d'une usure naturelle moyenne, les marges de puissance et notamment la deuxième marge de puissance décroit en fonction de la durée d'utilisation de manière prédictive. On comprend que le seuil haut peut être déduit de la connaissance de la marge de puissance du turbomoteur neuf et d'un objectif de durée d'utilisation du deuxième niveau de performances.

Suite à l'étape d'évaluation, on affiche le niveau de performances cible, et on pilote l'aéronef durant un vol selon le niveau de performances cible établi avant ce vol.

Les caractéristiques de chaque niveau de performances peuvent être inscrites dans le manuel de vol, ou encore programmées dans une mémoire embarquée et affichées sur un dispositif de signalisation.

On comprend que le seuil haut peut aussi prendre en considération la durée de vol maximale d'un vol. Ainsi, si le passage du deuxième niveau de performances au premier niveau de performances se produit durant un vol, il est possible de finir le vol dans les conditions du deuxième niveau de performances initiales.

Ce procédé permet donc d'agir sur une entité physique à savoir l'aéronef en autorisant le pilotage de l'aéronef selon un niveau de performances précis.

Le procédé peut de plus comporter une ou plusieurs des caractéristiques qui suivent.

Par exemple, chaque niveau de performances peut inclure au moins une performance à choisir dans une liste comprenant au moins une des performances suivantes : une masse de l'aéronef au décollage, une vitesse de croisière.

Le procédé présente donc l'avantage d'optimiser la masse au décollage de l'aéronef et/ ou une vitesse de croisière de l'aéronef si les turbomoteurs offrent une marge de puissance par rapport à une puissance minimale garantie.

Il est aussi possible d'afficher chaque marge de puissance. A l'aide de courbes préétablies par le constructeur, un utilisateur peut estimer aisément le temps d'utilisation restant du deuxième niveau de performances lors d'une usure naturelle.

Selon un autre aspect, le procédé peut requérir la prise en considération d'un seuil bas.

En effet, chaque turbomoteur doit subir une opération de maintenance lorsqu'un nombre d'heures de vol TBO est atteint.

Cependant, on peut requérir la maintenance d'un turbomoteur lorsqu'au moins une marge de puissance de ce turbomoteur est inférieure à un seuil bas. Eventuellement, chaque seuil bas peut avoir une valeur nulle. Ainsi, si la marge de puissance d'un turbomoteur devient négative, le deuxième niveau de performances n'est plus garanti.

Pour remédier à une dégradation anticipée intervenant avant le nombre d'heures de vol TBO, on peut donc comparer chaque marge de puissance à un seuil bas.

Selon cette variante durant l'étape d'évaluation :
- le constructeur garantit un deuxième niveau de performances lorsque chaque marge de puissance est supérieure ou égale à un seuil haut,
- le constructeur garantit un premier niveau de performances lorsqu'au moins une marge de puissance est comprise entre un seuil haut et un seuil bas et que chaque marge de puissance est supérieure au dit seuil bas,
- le constructeur requiert la maintenance d'un turbomoteur lorsqu'une marge de puissance du turbomoteur est inférieure à un seuil bas.

Selon un premier mode de réalisation, on peut effectuer l'étape de contrôle à une fréquence définie par le constructeur, telle qu'une fréquence de 25 heures éventuellement.

Si le niveau de performances cible est le deuxième niveau de performances, ce deuxième niveau de performances est donc utilisable au moins pendant une durée égale à ladite fréquence.

L'utilisateur peut avoir une estimation large du temps d'utilisation restant à l'aide des marges de puissance, et une estimation garantissant des performances à court terme via l'implémentation de ce premier mode de réalisation

Eventuellement, il est envisageable d'afficher le temps restant avant une nouvelle étape de contrôle, par le biais d'un compteur de temps par exemple.

Selon un deuxième mode de réalisation, on peut effectuer l'étape de contrôle de santé automatiquement en vol.

Selon une variante de ce mode de réalisation :
- on mesure et on mémorise en vol des données relatives à la vitesse de rotation Ng du générateur de gaz de chaque turbomoteur, la température des gaz dans ledit ensemble comprenant au moins une turbine, le couple développé par chaque turbomoteur et une vitesse d'évolution Nr en rotation d'une voilure tournante de l'aéronef, ce couple étant proportionnel à la puissance développée par le turbomoteur, et
- à une fréquence donnée, on évalue la stabilité des données mémorisées, et
- on détermine une valeur moyenne de chaque donnée, et
- on réalise l'étape de contrôle puis l'étape d'évaluation à l'aide desdites valeurs moyennes lorsque lesdites données sont stables.

Durant un vol, des données relatives à chaque turbomoteur sont donc mémorisées dans un moyen de stockage.

La stabilité de ces données est alors analysée. Il est par exemple possible d'utiliser une méthode connue consistant à déterminer un maximum, un minimum et un écart type. Si l'écart type est faible, on en déduit que les données sont stables.

On détermine ensuite une valeur moyenne de chaque donnée afin de réaliser l'étape de contrôle.

Si ces valeurs moyennes sont stables, on détermine la première marge de puissance et la deuxième marge de puissance à partir de ces valeurs moyennes.

Ainsi, on mesure le couple développé par chaque turbomoteur et la vitesse d'évolution Nr en rotation de la voilure tournante de l'aéronef à iso-vitesse Ng du générateur de gaz dudit turbomoteur. La mesure de couple peut être effectuée à l'aide d'un couple-mètre placé sur un arbre de travail entraîné par la turbine libre.

On en déduit alors la puissance courante.

En utilisant la valeur moyenne de la vitesse de rotation Ng du générateur de gaz, on en déduit la première marge de puissance.

De plus, en utilisant la valeur moyenne de la température des gaz dans ledit ensemble comprenant au moins une turbine, on en déduit la deuxième puissance courante et la deuxième marge de puissance.

Selon une variante alternative, on définit des phases de vol de mesures durant lesquelles l'étape de contrôle peut être réalisée, et on effectue l'étape de contrôle lorsque l'aéronef évolue durant une des phases de vol de mesures.

En utilisant des équipements adéquats de l'aéronef, il est possible d'identifier la phase de vol courante, telle qu'une phase de vol de croisière. Si la phase de vol courante correspond à une phase de vol de mesures définie par le constructeur, on effectue automatiquement l'étape de contrôle, et par suite l'étape d'évaluation.

Durant une étape de contrôle, on peut effectuer une pluralité de contrôle de santé turbomoteur, automatiquement ou sur requête d'un pilote.

Par suite, selon une variante, on réalise l'étape d'évaluation en utilisant une moyenne des marges de puissance résultant desdits contrôles de santé. En complément, à l'aide de méthodes usuelles, il est envisageable de ne pas tenir compte de résultats aberrants.

Une moyenne éventuellement associée à la suppression de points aberrants permet d'obtenir une image optimisée des marges de puissance déterminées.

Selon un autre aspect, on peut normaliser les marges de puissance à l'aide d'un premier indicateur de santé relatif à la première marge de puissance et d'une deuxième indicateur de santé relatif à ladite deuxième marge de puissance, chaque indicateur ayant une valeur maximale à la réception des turbomoteurs, une valeur intermédiaire représentant le seuil haut et une valeur minimale représentant un seuil bas.

Les marges de puissance varient d'un turbomoteur à l'autre en raison de dispersions lors de la fabrication de ces turbomoteurs. Afin d'éviter une dispersion importante des marges de puissance, ces marges de puissance sont normalisées par le biais de l'indicateur de santé.

Durant l'étape d'évaluation, chaque marge de puissance est alors comparée a au moins un seuil par le biais de son indicateur de santé.

Outre un procédé, l'invention vise aussi un dispositif d'optimisation mettant en oeuvre ce procédé. Le dispositif d'optimisation comporte notamment :
- un calculateur dit « calculateur moteur » par turbomoteur d'une installation motrice agencé pour mettre en oeuvre une étape de contrôle de santé du turbomoteur associée, et
- un calculateur dit « calculateur avionique » agencé pour mettre en oeuvre une étape d'évaluation afin de déterminer un niveau de performances cible, et
- un dispositif de signalisation dudit niveau de performances cible.

Le dispositif d'optimisation peut éventuellement comporter des moyens de déterminations de la phase de vol courante de l'aéronef.

Par ailleurs, l'invention vise aussi un aéronef comportant ce dispositif d'optimisation.

L'invention et ses avantages apparaîtront avec plus de détails dans le cadre de la description qui suit avec des exemples de réalisation donnés à titre illustratif en référence aux figures annexées qui représentent :
la figure 1, un schéma d'un aéronef selon l'invention, et
la figure 2, un schéma illustrant le procédé mis en oeuvre.

Les éléments présents dans plusieurs figures distinctes sont affectés d'une seule et même référence.

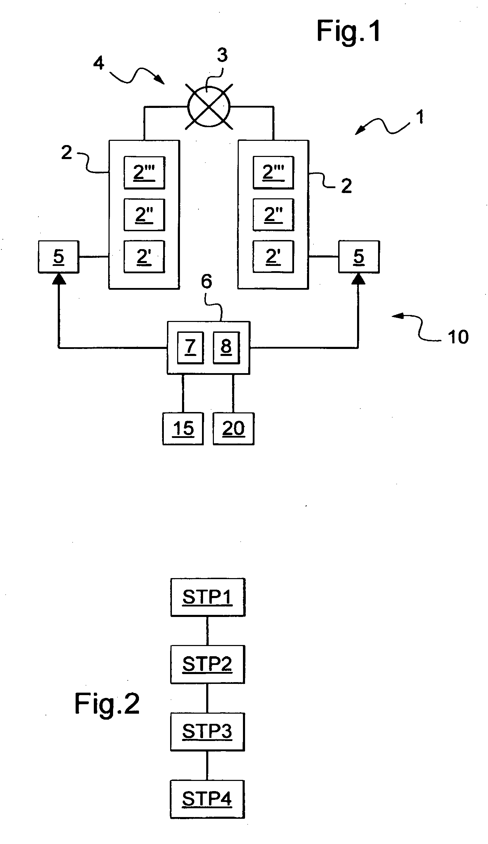

La figure 1 présente un aéronef 1 à voilure tournante 4. Cette voilure tournante 4 est mise en rotation par une installation motrice au travers d'une boîte de transmission principale de puissance 3.

Cette installation motrice comporte alors au moins un turbomoteur 2. Plus précisément, l'aéronef 1 représenté comporte deux turbomoteurs 2.

Chaque turbomoteur 2 peut être un turbomoteur, ce turbomoteur comprenant notamment un générateur de gaz 2', ainsi qu'un ensemble comprenant au moins une turbine. Cet ensemble comprend par exemple une turbine haute pression 2" et une turbine libre 2"'.

Certaines performances de l'aéronef peuvent dépendre notamment des puissances développées par les turbomoteurs 2. Parmi ces performance, on peut citer la masse au décollage de l'aéronef 1, ou encore une vitesse de croisière de cet aéronef 1.

Pour optimiser ces performances, l'aéronef 1 comprend un dispositif 10 d'optimisation.

Ce dispositif 10 comporte un calculateur moteur 5 par turbomoteur 2, tel qu'un calculateur connu sous l'acronyme FADEC ou l'expression « Full Authority digital engine control » en langue anglaise.

De plus, le dispositif 10 est muni d'un calculateur avionique 6 coopérant avec chaque calculateur moteur 5 pour déterminer un niveau de performances cible à respecter conformément au procédé selon l'invention.

Le dispositif 10 comprend de plus des capteurs non représentés pour effectuer les mesures requises.

Pour appliquer ce procédé, le calculateur avionique peut comprendre un moyen de calcul 7 et un moyen de stockage 8. De plus, le calculateur avionique peut communiquer par des liaisons filaires ou non filaires avec un dispositif de signalisation 20 d'informations et avec un moyen de détermination 15 de la phase de vol courante de l'aéronef.

La figure 2 présente un schéma pour expliciter ce procédé.

Durant une étape de définition STP1, le constructeur définit un premier niveau et un deuxième niveau de performances de l'aéronef.

Par exemple, chaque niveau de performances définit une masse au décollage de l'aéronef et une vitesse de croisière de cet aéronef.

Le premier niveau LEND de performances peut correspondre à un niveau de performances minimales. Ce premier niveau LEND de performances peut donc correspondre au niveau de performances garanties sur un aéronef classique présentant des performances fixes.

Par contre, le deuxième niveau HEND de performances vise à exploiter les marges de puissance des turbomoteurs par rapport aux puissances du premier niveau LEND de performances.

Le deuxième niveau HEND de performances permet alors d'atteindre une masse au décollage et/ou une vitesse de croisière supérieure(s) à la masse au décollage et/ou à la vitesse de croisière associée(s) au premier niveau LEND de performances.

Ce procédé établit alors deux niveaux de performances distincts, et non pas un unique niveau de performances pourvu éventuellement de caractéristiques évolutives.

Durant une étape de contrôle STP2, au moins un contrôle de santé des turbomoteurs 2 est réalisé.

Chaque calculateur moteur 5 procède alors au contrôle de santé en:
∘ déterminant une puissance courante délivrée par chaque turbomoteur à l'aide de capteurs adéquats,
∘ mesurant une vitesse de rotation Ng courante du générateur de gaz 2' du turbomoteur 2,
∘ déterminant une première marge de puissance entre la puissance courante et une première puissance minimale, la première puissance minimale étant définie par le constructeur pour garantir le premier niveau de performances lorsque la vitesse de rotation Ng du générateur de gaz 2' est égale à la vitesse de rotation Ng courante mesurée.

On comprend que le calculateur moteur comporte une mémoire fournissant la première puissance minimale en fonction de la vitesse de rotation Ng courante mesurée.

Par exemple, on mesure le couple développé par chaque turbomoteur et la vitesse d'évolution Nr en rotation de la voilure tournante de l'aéronef à iso-vitesse Ng du générateur de gaz dudit turbomoteur à l'aide de capteurs usuels.

On en déduit alors classiquement la puissance courante et la première marge de puissance. La puissance courante est égale au produit de la vitesse d'évolution Nr et dudit couple multiplié éventuellement par un rapport de réduction. Ce rapport de réduction est défini par le constructeur pour lier ladite vitesse d'évolution de la voilure tournante et la vitesse de rotation de l'arbre du turbomoteur sur lequel est mesuré ledit couple.

Il est aussi possible de mesurer le couple développé par un arbre de sortie de chaque turbomoteur entraîné par une turbine libre, et la vitesse de rotation de cet arbre de sortie à l'aide de capteurs usuels.

On en déduit alors classiquement la puissance courante et la première marge de puissance. La puissance courante est égale au produit de la vitesse de rotation de cet arbre de sortie et dudit couple.

De plus, chaque calculateur moteur 5 procède alors au contrôle de santé en:
o mesurant une température des gaz dans ledit ensemble d'au moins une turbine à l'aide de capteurs adéquats, soit une température TET des gaz à l'entrée de chaque turbine haute pression 2" ou soit une température T45 des gaz à l'entrée d'une turbine libre 2"' faisant suite à la turbine haute pression 2",
∘ déterminant une deuxième marge de puissance entre ladite puissance courante et une deuxième puissance minimale, la deuxième puissance minimale étant définie par le constructeur pour garantir ledit premier niveau de performances lorsque la température surveillée des gaz est égale à la température courante.

On comprend que le calculateur moteur comporte une mémoire fournissant la deuxième puissance minimale en fonction de la température courante mesurée.

Il est possible de mettre en oeuvre les techniques connues pour effectuer ces contrôles.

Durant une étape d'évaluation STP3, le calculateur avionique 6 utilise la première marge de puissance et la deuxième marge de puissance déterminées.

Ce calculateur avionique compare alors chaque marge de puissance à un seuil haut.

Ainsi, le calculateur avionique exécute des instructions mémorisés dans son moyen de stockage pour déterminer si la première marge de puissance est supérieure ou égale à un premier seuil haut SH1 et si la deuxième marge de puissance est supérieure ou égale à un deuxième seuil haut SH2 pour chacun des moteurs de l'aéronef.

Dans l'affirmative, il est possible d'atteindre les performances du deuxième niveau de performances HEND. Le niveau de performances cible à respecter est donc le deuxième niveau de performances HEND.

Dans la négative et donc si au moins une marge de puissance est inférieure au seuil haut associé, il n'est pas possible d'atteindre les performances du deuxième niveau de performances HEND. Le niveau de performances cible à respecter est donc le premier niveau de performances LEND.

Durant une étape de signalisation STP4, on affiche des informations relatives au niveau de performances cible.

Par exemple, on affiche sur le dispositif de signalisation 20 l'expression « HIGH END » lorsque le niveau de performances cible est le deuxième niveau de performances HEND, et l'expression « LOW END » lorsque le niveau de performances cible est le premier niveau de performances LEND.

Un pilote peut consulter un manuel de vol fournissant le détail du niveau de performances à appliquer afin de piloter l'aéronef durant un vol selon le niveau de performances cible établi avant ce vol.

De manière alternative ou en complément, le calculateur avionique peut afficher le détail du niveau de performances à appliquer.

Il est aussi possible d'afficher notamment chaque marge de puissance résultant du contrôle de santé.

Par ailleurs, le calculateur avionique peut aussi prendre en considération un seuil bas par marge de puissance, le seuil bas étant inférieur au seuil haut.

Ainsi, si la première marge de puissance ou la deuxième marge de puissance d'un turbomoteur est inférieure au seuil bas, le calculateur avionique peut requérir une action de maintenance.

Par exemple, le calculateur avionique affiche un ordre de maintenance sur le dispositif de signalisation 20.

Selon un autre aspect, durant l'étape de contrôle STP2, chaque calculateur moteur 5 peut effectuer non pas un contrôle de santé mais une pluralité de contrôles de santé.

Durant l'étape d'évaluation STP3, le calculateur avionique 6 peut exécuter des instructions mémorisées pour réaliser une moyenne glissante de résultats des divers contrôles de santé.

Dès lors, le calculateur avionique calcule une première marge de puissance à partir d'une moyenne glissante des premières marges de puissance déterminées et une deuxième marge de puissance à partir d'une moyenne glissante des deuxièmes marges de puissance déterminées. Le calculateur avionique compare alors chaque marge de puissance résultant d'une moyenne glissante à un seuil haut, voire à un seuil bas le cas échéant.

Selon un autre aspect, pour lisser les dispersions de puissance observées sur les turbomoteurs neuf, il est possible de normaliser les marges de puissance à l'aide d'un premier indicateur de santé IND1 relatif à la première marge de puissance et d'un deuxième indicateur de santé IND2 relatif à la deuxième marge de puissance.

L'indicateur de santé du turbomoteur correspond alors au minimum entre le premier indicateur de santé IND1 et le deuxième indicateur de santé IND2.

Chaque indicateur possède une valeur maximale à la réception des turbomoteurs, une valeur intermédiaire représentant le seuil haut, et une valeur minimale représentant un seuil bas le cas échéant.

Les valeurs maximale, intermédiaire et minimale peuvent valoir respectivement 10, 5 et 0.

Pour illustrer le fonctionnement de cette variante, à un instant donné, la première marge de puissance peut être de 7.5 % et correspondre à un premier indicateur de santé valant 9.1, alors que la deuxième marge de puissance vaut 5.5% et correspond à un deuxième indicateur de santé valant 9.3.

L'indicateur de santé global du turbomoteur vaut alors 9.1. De plus chaque marge de puissance est supérieure au seuil haut correspondant à un indicateur de santé de 5 ce qui implique que le deuxième niveau de performances HEND peut être atteint.

Dans ce cas de figure, il est possible de comparer chaque marge de puissance au seuil associé en comparant l'indicateur de santé global du turbomoteur à un seuil.

Selon un premier mode de réalisation, on effectue l'étape de contrôle STP2 à une fréquence définie par le constructeur. Par exemple, cette fréquence peut être de l'ordre de 25 heures.

Tous les 25 heures, un pilote effectue donc un vol dans les conditions requises pour que chaque calculateur moteur 5 réalise au moins un contrôle de santé.

Il est envisageable d'afficher le temps restant avant une nouvelle étape de contrôle.

Selon un deuxième mode de réalisation moins contraignant, on effectue automatiquement en vol l'étape de contrôle.

On comprend qu'il est possible d'implémenter ces deux modes de réalisation sur un même aéronef. Un pilote peut alors au choix requérir manuellement le contrôle de santé ou effectuer un tel contrôle automatiquement.

Selon une variante du deuxième mode de réalisation :
- on mesure et on mémorise en vol des données relatives à la vitesse de rotation Ng du générateur de gaz de chaque turbomoteur, la température des gaz TET, T45 dans ledit ensemble comprenant au moins une turbine de chaque turbomoteur et le couple développé par chaque turbomoteur, et la vitesse d'évolution Nr en rotation de la voilure tournante,
- à une fréquence donnée, on évalue la stabilité des données mémorisées,
- on détermine une valeur moyenne de chaque donnée,
- on réalise l'étape de contrôle puis l'étape d'évaluation à l'aide desdites valeurs moyennes lorsque lesdites données sont stables

Par exemple, chaque calculateur moteur mesure des données relatives à la vitesse de rotation Ng du générateur de gaz de chaque turbomoteur, la température TET des gaz à l'entrée de la turbine haute pression de chaque turbomoteur et le couple développé par le turbomoteur correspondant.

Chaque calculateur moteur envoie en permanence ces données au calculateur avionique qui les stocke. Le stockage des données peut être temporaire pour limiter le volume du moyen de stockage.

Le calculateur avionique détermine si les données transmises sont stables selon des critères de stabilité définis par le constructeur.

Si un jeu de données présente les critères requis de stabilité, le calculateur avionique envoie à chaque calculateur moteur une requête pour effectuer au moins un contrôle de santé.

Chaque calculateur moteur peut déterminer une valeur moyenne de chaque donnée basée sur les échantillons jugés stables par le calculateur avionique. En utilisant les valeurs moyennes déterminées, chaque calculateur moteur en déduit la première marge de puissance et la deuxième marge de puissance.

Chaque calculateur moteur transmet la première marge de puissance et la deuxième marge de puissance résultant du contrôle de santé au calculateur avionique.

Ce calculateur avionique peut afficher la première marge de puissance et la deuxième marge de puissance et/ou mettre en oeuvre l'étape d'évaluation.

Selon une deuxième variante, le constructeur définit des phases de vol de mesures durant lesquelles l'étape de contrôle STP2 peut être effectuée.

Lorsque le calculateur avionique détecte via le moyen de détermination 15 que l'aéronef évolue durant une desdites phases de vol de mesures, ce calculateur avionique envoie à chaque calculateur moteur une requête pour effectuer au moins un contrôle de santé.

## Revendications

1. Procédé d'optimisation des performances d'un aéronef (1) à voilure tournante (4) mis en mouvement par une installation motrice comprenant au moins un turbomoteur (2), chaque turbomoteur (2) ayant un générateur de gaz (2') et un ensemble comprenant au moins une turbine (2", 2"') au cours duquel :
- durant une étape de définition (STP1), un premier niveau (LEND) de performances minimales de l'aéronef et un deuxième niveau (HEND) de performances maximales de l'aéronef (1) sont définis par le constructeur, et
- durant une étape de contrôle (STP2), au moins un contrôle de la santé de chaque turbomoteur (2) est réalisé en :
∘ déterminant une puissance courante délivrée par chaque turbomoteur (2),
∘ mesurant une vitesse de rotation (Ng) courante et une température (TET, T45) courante des gaz dudit ensemble,
∘ déterminant une première marge de puissance entre ladite puissance courante et une première puissance minimale définie par le constructeur pour garantir ledit premier niveau de performances à ladite vitesse de rotation (Ng) courante,
∘ déterminant une deuxième marge de puissance entre ladite puissance courante et une deuxième puissance minimale définie par le constructeur pour garantir ledit premier niveau de performances à ladite température (TET, T45) courante, et
- durant une étape d'évaluation (STP3), on compare chaque marge de puissance à un premier seuil (SH1, SH2), un niveau de performances cible étant le deuxième niveau de performances lorsque la première et la deuxième marges de puissance de chaque turbomoteur sont respectivement supérieures ou égales à un premier seuil haut (SH1) et un deuxième seuil haut (SH2), ledit niveau de performances cible étant le premier niveau de performances lorsque la première marge de puissance d'un turbomoteur est inférieure au premier seuil haut et/ou lorsque la deuxième marge de puissance d'un turbomoteur est inférieure au deuxième seuil haut, et
- on affiche le niveau de performances cible, et on pilote l'aéronef durant un vol selon le niveau de performances cible établi avant ce vol.

2. Procédé selon la revendication 1,
**caractérisé en ce qu'**on requiert la maintenance d'un turbomoteur (2) lorsqu'au moins une marge de puissance de ce turbomoteur est inférieure à un seuil bas (SB1, SB2).

3. Procédé selon l'une quelconque des revendications 1 à 2,
**caractérisé en ce que**, chaque niveau de performances inclut au moins une performance à choisir dans une liste comprenant au moins une des performances suivantes : une masse de l'aéronef (1) au décollage, une vitesse de croisière de l'aéronef (1).

4. Procédé selon l'une quelconque des revendications 1 à 3,
**caractérisé en ce qu'**on effectue l'étape de contrôle (STP2) à une fréquence définie par le constructeur.

5. Procédé selon la revendication 4,
**caractérisé en ce qu'**on affiche le temps restant avant une nouvelle étape de contrôle.

6. Procédé selon l'une quelconque des revendications 1 à 5
**caractérisé en ce qu'**on effectue automatiquement en vol l'étape de contrôle.

7. Procédé selon l'une quelconque des revendications 1 à 3, **caractérisé en ce que** :
- on mesure et on mémorise en vol des données relatives à la vitesse de rotation (Ng) du générateur de gaz de chaque turbomoteur, la température (TET, T45) des gaz dans ledit ensemble de chaque turbomoteur et le couple développé par chaque turbomoteur et une vitesse d'évolution (Nr) en rotation de ladite voilure tournante (4), et
- à une fréquence donnée, on évalue la stabilité des données mémorisées, et
- on détermine une valeur moyenne de chaque donnée, et
- on réalise l'étape de contrôle puis l'étape d'évaluation à l'aide desdites valeurs moyennes lorsque lesdites données sont stables.

8. Procédé selon l'une quelconque des revendications 1 à 3,
**caractérisé en ce qu'**on définit des phases de vol de mesures durant lesquelles l'étape de contrôle peut être réalisée, et on effectue l'étape de contrôle lorsque l'aéronef évolue durant une desdites phases de vol de mesures.

9. Procédé selon l'une quelconque des revendications 1 à 8,
**caractérisé en ce qu'**on effectue une pluralité de contrôles de santé turbomoteur, et on réalise ladite étape d'évaluation en utilisant une moyenne glissante des marges de puissance résultant desdits contrôles de santé.

10. Procédé selon l'une quelconque des revendications 1 à 9,
**caractérisé en ce qu'**on normalise lesdites marges de puissance à l'aide d'un premier indicateur de santé (IND1) relatif à ladite première marge et d'un deuxième indicateur de santé (IND2) relatif à ladite deuxième marge, chaque indicateur ayant une valeur maximale à la réception des turbomoteurs, une valeur intermédiaire représentant le seuil haut et une valeur minimale représentant un seuil bas.

11. Procédé selon l'une quelconque des revendications 1 à 10,
**caractérisé en ce qu'**on affiche chaque marge de puissance.

12. Procédé selon l'une quelconque des revendications 1 à 11,
**caractérisé en ce que** ladite température (TET, T45) des gaz dans ledit ensemble est soit la température (TET) des gaz à l'entrée d'une turbine haute pression soit la température (T45) des gaz à l'entrée d'une turbine libre faisant suite à la turbine haute pression.

13. Dispositif (10) d'optimisation mettant en oeuvre le procédé selon l'une quelconque des revendications 1 à 12,
**caractérisé en ce qu'**il comporte :
- un calculateur moteur (5) par turbomoteur (2) d'une installation motrice agencé pour mettre en oeuvre une étape de contrôle de santé (STP2) du turbomoteur (2) associée, et
- un calculateur avionique (6) agencé pour mettre en oeuvre une étape d'évaluation (STP3) afin de déterminer un niveau de performances cible, et
- un moyen de signalisation (15) dudit niveau de performances cible.

14. Aéronef (1),
**caractérisé en ce qu'**il comporte un dispositif (10) d'optimisation selon la revendication 13.

## Patentansprüche

1. Verfahren zur Optimierung der Leistungen eines Luftfahrzeugs (1) mit Drehflügeln (4), die durch eine Antriebseinheit in Bewegung versetzt werden, die mindestens einen Turbomotor (2) aufweist, wobei jeder Turbomotor (2) einen Gasgenerator (2') und eine Einheit aufweist mit mindestens einer Turbine (2", 2"'), bei dem:
- während eines Definitionsschritts (STP1) von dem Konstrukteur ein erstes Niveau (LEND) minimaler Leistungen des Luftfahrzeugs und ein zweites Niveau (HEND) maximaler Leistungen des Luftfahrzeugs (1) definiert werden, und
- während eines Prüfungsschritts (STP2) mindestens eine Prüfung des Zustands eines jeden Turbomotors (2) durchgeführt wird, indem:
∘ eine aktuelle Leistung bestimmt wird, die von jedem Turbomotor (2) geliefert wird,
∘ eine aktuelle Drehzahl (Ng) und eine aktuelle Temperatur (TET, T45) von Gasen der Einheit gemessen werden,
∘ eine erste Leistungsspanne zwischen der aktuellen Leistung und einer ersten minimalen Leistung, die von dem Konstrukteur definiert wird, um das erste Leistungsniveau für die aktuelle Drehzahl (Ng) sicherzustellen, bestimmt wird,
∘ eine zweite Leistungsspanne zwischen der aktuellen Leistung und einer zweiten minimalen Leistung, die von dem Konstrukteur definiert wird, um das erste Leistungsniveau für die aktuelle Temperatur (TET, T45) sicherzustellen, bestimmt wird, und
- während eines Bewertungsschritts (STP3) jede Leistungsspanne mit einem ersten Schwellenwert (SH1, SH2) verglichen wird, wobei ein anvisiertes Leistungsniveau das zweite Leistungsniveau ist, wenn die erste und die zweite Leistungsspanne eines jeden Turbomotors jeweils größer oder gleich einem ersten hohen Schwellenwert (SH1) und einem zweiten hohen Schwellenwert (SH2) ist, wobei das anvisierte Leistungsniveau das erste Leistungsniveau ist, wenn die erste Leistungsspanne eines Turbomotors kleiner ist als der erste hohe Schwellenwert und/oder wenn die zweite Leistungsspanne eines Turbomotors kleiner ist als der zweite hohe Schwellenwert, und
- das anvisierte Leistungsniveau angezeigt wird und das Luftfahrzeug während eines Flugs mit den anvisierten Leistungsniveaus geflogen wird, die vor dem Flug festgelegt wurden.

2. Verfahren nach Anspruch 1,
dadurch gekenntzeichnet, dass eine Instandsetzung eines Turbomotors (2) angefordert wird, wenn mindestens eine Leistungsspanne des Turbomotors kleiner ist als ein unterer Schwellenwert (SB1, SB2).

3. Verfahren nach einem der Ansprüche 1 bis 2,
**dadurch gekennzeichnet, dass** jedes Leistungsniveau mindestens eine Leistung umfasst, die aus einer Liste zu wählen ist, die mindestens eine der folgenden Leistungen umfasst: eine Masse des Luftfahrzeugs (1) beim Start, eine Reisegeschwindigkeit des Luftfahrzeugs (1).

4. Verfahren nach einem der Ansprüche 1 bis 3,
**dadurch gekennzeichnet, dass** der Überprüfungsschritt (STP2) mit einer vom Konstrukteur definierten Frequenz durchgeführt wird.

5. Verfahren nach Anspruch 4,
**dadurch gekennzeichnet, dass** die verbleibende Zeit bis zu einem neuen Überprüfungsschritt angezeigt wird.

6. Verfahren nach einem der Ansprüche 1 bis 5,
**dadurch gekennzeichnet, dass** der Überprüfungsschritt während des Fluges automatisch durchgeführt wird.

7. Verfahren nach einem der Ansprüche 1 bis 3,
**dadurch gekennzeichnet, dass**
- während des Flugs Daten bezüglich der Drehzahl (Ng) des Gasgenerators eines jeden Turbomotors, die Temperatur (TET, T45) von Gasen in der Einheit eines jeden Turbomotors und das von jedem Turbomotor entwickelte Drehmoment, und eine Drehgeschwindigkeitsentwicklung (Nr) der Drehflügel (4) gemessen und gespeichert werden, und
- mit einer vorgegebenen Frequenz die Stabilität von gespeicherten Daten ermittelt wird, und
- ein Mittelwert für jeden Datenwert bestimmt wird, und
- ein Überprüfungsschritt nach dem Erfassungsschritt mit Hilfe der Mittelwerte durchgeführt wird, wenn die Datenwerte stabil sind.

8. Verfahren nach einem der Ansprüche 1 bis 3,
**dadurch gekennzeichnet, dass** Messflugphasen definiert werden, während denen der Überprüfungsschritt durchgeführt werden kann, und der Überprüfungsschritt durchgeführt wird, während sich das Luftfahrzeug während einer der Messflugphasen bewegt.

9. Verfahren nach einem der Ansprüche 1 bis 8,
**dadurch gekennzeichnet, dass** eine Mehrzahl von Überprüfungen des Zustands der Turbomotoren durchgeführt wird, und der Erfassungsschritt durchgeführt wird unter Verwendung eines gleitenden Mittelwerts der Leistungsspannen, die sich aus den Zustandsüberprüfungen ergeben.

10. Verfahren nach einem der Ansprüche 1 bis 9,
**dadurch gekennzeichnet, dass** die Leistungsspannen normiert werden mit Hilfe eines ersten Zustandsanzeigers (IND1) bezüglich der ersten Spanne und eines zweiten Zustandsanzeigers (IND2) bezüglich der zweiten Spanne, wobei jeder Anzeiger einen Maximalwert bei der Abnahme von Turbomotoren, einen Zwischenwert, der den hohen Schwellenwert darstellt, und einen minimalen Wert, der einen unteren Schwellenwert darstellt, hat.

11. Verfahren nach einem der Ansprüche 1 bis 10,
**dadurch gekennzeichnet, dass** jede Leistungsspanne angezeigt wird.

12. Verfahren nach einem der Ansprüche 1 bis 11,
**dadurch gekennzeichnet, dass** die Temperatur (TET, T45) von Gasen in der Einheit entweder die Temperatur (TET) von Gasen am Eingang einer Hochdruckturbine ist oder die Temperatur (T45) von Gasen am Eingang einer Freilaufturbine ist, die hinter der Hochdruckturbine angeordnet ist.

13. Vorrichtung (10) zur Optimierung, welche das Verfahren nach einem der Ansprüche 1 bis 12 umsetzt,
**dadurch gekennzeichnet, dass** sie aufweist:
- einen Motorrechner (5) pro Turbomotor (2) einer Antriebseinheit, der vorgesehen ist, um einen Zustandsüberprüfungsschritt (STP2) des zugehörigen Turbomotors (2) durchzuführen, und
- einen Avionikrechner (6), der vorgesehen ist, um einen Überprüfungsschritt (STP3) auszuführen, um ein Niveau angestrebter Leistungen zu bestimmen, und
- ein Anzeigemittel (15) für das angestrebte Niveau von Leistungen.

14. Luftfahrzeug (1),
**dadurch gekennzeichnet, dass** es eine Vorrichtung (10) zur Optimierung gemäß Anspruch 13 aufweist.

## Claims

1. Method for optimising the performance of an aircraft (1) having a rotary wing (4) set in motion by a power plant comprising at least one turbine engine (2), each turbine engine (2) having a gas generator (2') and an assembly comprising at least one turbine (2", 2"'), in which method:
- during a definition step (STP1), a minimum first performance level (LEND) of the aircraft and a maximum second performance level (HEND) of the aircraft (1) are defined by the manufacturer, and
- during a check step (STP2), at least one health check of each turbine engine (2) is performed by:
∘ determining a current power delivered by each turbine engine (2),
∘ measuring a current speed of rotation (Ng) and a current temperature (TET, T45) of the gases of said assembly,
∘ determining a first power margin between said current power and a first minimum power defined by the manufacturer for guaranteeing said first performance level at said current speed of rotation (Ng),
∘ determining a second power margin between said current power and a second minimum power defined by the manufacturer for guaranteeing said first performance level at said current temperature (TET, T45), and
- during an evaluation step (STP3), each power margin is compared with a first threshold (SH1, SH2), a target performance level being the second performance level when the first and second power margins of each turbine engine are respectively greater than or equal to a first high threshold (SH1) and a second high threshold (SH2), said target performance level being the first performance level when the first power margin of a turbine engine is less than the first high threshold and/or when the second power margin of a turbine engine is less than the second high threshold, and
- the target performance level is displayed, and the aircraft is piloted during a flight in accordance with the target performance level established before the flight.

2. Method according to claim 1,
**characterised in that** maintenance of a turbine engine (2) is required when at least one power margin of the turbine engine is less than a low threshold (SB1, SB2).

3. Method according to any one of claims 1 to 2,
**characterised in that** each performance level includes at least one performance to be selected from a list comprising at least one of the following performances: a take-off weight of the aircraft (1), a cruising speed of the aircraft (1).

4. Method according to any one of claims 1 to 3,
**characterised in that** the check step (STP2) is performed at a frequency defined by the manufacturer.

5. Method according to claim 4,
**characterised in that** the time remaining before a new check step is displayed.

6. Method according to any one of claims 1 to 5,
**characterised in that** the check step is performed automatically in flight.

7. Method according to any one of claims 1 to 3,
**characterised in that**:
- data relating to the speed of rotation (Ng) of the gas generator of each turbine engine, the temperature (TET, T45) of the gases in said assembly of each turbine engine and the torque developed by each turbine engine and a speed of change (Nr) in rotation of said rotary wing (4) is measured and stored in flight, and
- at a given frequency, the stability of the stored data is evaluated, and
- a mean value for each data item is determined, and
- the check step and then the evaluation step are performed with the help of said mean values when said data is stable.

8. Method according to any one of claims 1 to 3,
**characterised in that** measurement flight stages during which the check step may be performed are defined, and the check step is performed when the aircraft is manoeuvring during one of said measurement flight stages.

9. Method according to any one of claims 1 to 8,
**characterised in that** a plurality of turbine engine health checks are performed, and said evaluation step is performed by using a moving average of the power margins resulting from said health checks.

10. Method according to any one of claims 1 to 9,
**characterised in that** said power margins are normalised with the help of a first health indicator (IND1) relating to said first margin and of a second health indicator (IND2) relating to said second margin, each indicator having a maximum value on receipt of the turbine engines, an intermediate value representing the high threshold and a minimum value representing a low threshold.

11. Method according to any one of claims 1 to 10,
**characterised in that** each power margin is displayed.

12. Method according to any one of claims 1 to 11,
**characterised in that** said temperature (TET, T45) of the gases in said assembly is either the temperature (TET) of the gases at the inlet of a high-pressure turbine or the temperature (T45) of the gases at the inlet of a free turbine following the high-pressure turbine.

13. Optimisation device (10) implementing the method according to any one of claims 1 to 12,
**characterised in that** it comprises:
- one engine computer (5) per turbine engine (2) of a power plant configured to implement a health check step (STP2) for checking the health of the associated turbine engine (2), and
- an avionics computer (6) configured to implement an evaluation step (STP3) in order to determine a target performance level, and
- a signalling means (15) for signalling said target performance level.

14. Aircraft (1),
**characterised in that** it comprises an optimisation device according to claim 13.
